# EUROPÄISCHE PATENTSCHRIFT

(11) **EP 3 575 864 B1**
(45) Veröffentlichungstag und Bekanntmachung des Hinweises auf die Patenterteilung: **19.08.2020**
(21) Anmeldenummer: 19177239.1
(22) Anmeldetag: 29.05.2019
(51) Int. Cl.: G03B 17/02, G03B 17/55, B08B 3/04, G02B 27/00, B60R 1/062, G08B 13/196, B25J 5/00, F23M 11/04, G03B 31/00, G03B 17/56

(54) **VERFAHREN UND VERWENDUNG EINER MOBILEN ÜBERWACHUNGSEINRICHTUNG ZUM BETRIEB EINER HÜTTENTECHNISCHEN ANLAGE**
METHOD AND USE OF A MOBILE OBSERVATION DEVICE TO OPERATE A FURNACE
PROCÉDÉ ET UTILISATION D'UN DISPOSITIF D'OBSERVATION MOBILE POUR OPERER UN FOURNAISE

(30) Priorität: 30.05.2018 DE 102018208557
(43) Veröffentlichungstag der Anmeldung: 04.12.2019
(73) Patentinhaber: SMS Group GmbH, 40237 Düsseldorf (DE)
(72) Erfinder: Weyer, Axel, 42349 Wuppertal (DE); Klein, Martin, 45277 Essen (DE)
(74) Vertreter: Klüppel, Walter

(56) Entgegenhaltungen:
- CN-B- 102 175 039
- JP-A- H0 972 852
- KR-A- 20140 018 505

## Beschreibung

Die Erfindung betrifft ein Verfahren zum Betrieb einer hüttentechnischen Anlage nach dem Oberbegriff von Anspruch 1, die Verwendung einer mobilen Überwachungseinrichtung zum Betrieb einer solchen hüttentechnischen Anlage, und eine mobile Überwachungseinrichtung insbesondere zur Verwendung bei einer hüttentechnischen Anlage nach dem Oberbegriff von Anspruch 23.

Nach dem Stand der Technik sind für einen Betrieb von hüttentechnischen Anlagen Video- und Industriekameras bekannt, die in solchen Anlagen eine ortsfeste Installationsposition besitzen. Diese Kameras befinden sich dabei in der Regel an nicht einsehbaren oder gefahrenträchtigen Positionen einer hüttentechnischen Anlage, wobei von diesen Kameras ein aufgezeichnetes Bild zur Visualisierung an den Leitstand der Anlage übermittelt wird. Gleiches gilt für den Installationsort von Messgeräten zur Messung und Überprüfung von Gaskonzentrationen, die für Mensch oder Maschine gefährdend sind.

In Bezug auf den vorstehend genannten Stand der Technik besteht ein Nachteil dahingehend, dass die besagten Kameras ortsfest installiert sind, denn: In Folge dieser ortsfesten Installation sind nur begrenzte Bilddarstellungen bzw.
- ausschnitte von dem überwachten Anlagenbereich bzw. dem zugehörigen Betriebsprozess möglich. Selbst ein Schwenken und/oder Zoomen der Kameraobjektive, was durch eine Fernsteuerung z.B. von dem Leitstand aus eingestellt werden kann, gewährleistet keinen ausreichenden oder vollständigen Einblick in alle erforderlichen Bereiche einer zu überwachenden hüttentechnischen Anlage. Dies gilt insbesondere für den Fall, dass Anlagenstörungen auftreten oder - betriebsbedingt - ungünstige Sichtverhältnisse herrschen, beispielsweise bei Rauch-, Dampf-, Nebel- oder Feuerentwicklung.

Ein weiterer Nachteil bei den vorstehend genannten fest installierten Kameras besteht darin, dass Wartungs- und Reparaturarbeiten nur bei einem Stillstand der Anlage bzw. bei nicht laufendem Prozess möglich sind. Anders ausgedrückt, können verschmutzte Objektive der fest installierten Überwachungskameras nicht im laufenden Produktionsbetrieb gereinigt werden.

Schließlich darf im Hinblick auf eine Messung von gefährdenden Gasen beim Betrieb von hüttentechnischen Anlagen auf den Nachteil hingewiesen werden, dass die hierzu erforderliche Anzahl von Messgeräten groß ist, um die betroffenen Bereiche einer solchen Anlage sicher überwachen zu können. Eine solch große Anzahl von Messgeräten ist kostspielig und wirkt sich negativ auf das Kosten-/Nutzenverhältnis aus.

Aus KR 2014 0018505 A ist ein mobiler Roboter mit einem mehrteiligen gelenkigen Auslegerarm bekannt. An einem freien Ende dieses Auslegerarms ist ein Paar Schaufeln angebracht, mit denen Reinigungsarbeiten für ein Abstichloch durchgeführt werden können. Die Ansteuerung dieser Schaufeln erfolgt mit Hilfe einer Kameraeinheit, die auf einem horizontalen Abschnitt eines Armsegments des Auslegerarms angebracht ist.

Der Erfindung liegt die Aufgabe zugrunde, den Betrieb einer hüttentechnischen Anlage mit preiswerten Mitteln zu optimieren und insbesondere die Betriebssicherheit von solchen Anlagen zu erhöhen.

Diese Aufgabe wird durch ein Verfahren zum Betrieb einer hüttentechnischen Anlage mit den Merkmalen von Anspruch 1, durch eine mit den Merkmalen von Anspruch 2 angegebene Verwendung einer mobilen Überwachungseinrichtung, als auch durch eine mobile Überwachungseinrichtung mit den Merkmalen von Anspruch 23 gelöst. Vorteilhafte Weiterbildungen der Erfindung sind in den abhängigen Ansprüchen definiert.

Ein Verfahren nach der vorliegenden Erfindung dient zum Betrieb einer hüttentechnischen Anlage. Hierbei wird eine Überwachungseinrichtung mit zumindest einer ersten Kamera eingesetzt, wobei zumindest ein erforderlicher Betriebsprozess der hüttentechnischen Anlage auf Grundlage des eingestellten Bildbereichs der ersten Kamera, mit dem ein Bereich der hüttentechnischen Anlage beobachtet wird, ferngesteuert wird. Die Überwachungseinrichtung ist mobil und kann im Bereich der hüttentechnischen Anlage auf einer im Wesentlichen ebenen Fläche frei verfahren werden.

Die vorliegende Erfindung betrifft des Weiteren die Verwendung einer mobilen Überwachungseinrichtung zum Betrieb einer hüttentechnischen Anlage. Hierbei weist die Überwachungseinrichtung zumindest eine erste Kamera auf, wobei zumindest ein erforderlicher Betriebsprozess der hüttentechnischen Anlage auf Grundlage eines eingestellten Bildbereichs der ersten Kamera, mit dem ein Bereich der hüttentechnischen Anlage beobachtet wird, ferngesteuert wird. In vorteilhafter Weiterbildung einer solchen Verwendung der vorstehend genannten mobilen Überwachungseinrichtung kann diese im Bereich der hüttentechnischen Anlage auf einer im Wesentlichen ebenen Fläche frei verfahren werden.

Der Erfindung liegt die wesentliche Erkenntnis zugrunde, dass es mit Hilfe der mobilen Überwachungseinrichtung möglich ist, einen Betriebszustand einer hüttentechnischen Anlage (z.B. ein Prozesszustand und/oder ein Anlagenzustand von Anlagenkomponenten und deren Umgebung) zumindest visuell und ggf. auch akustisch und/oder in Bezug auf eine Bestimmung von Gaskonzentrationen zu überwachen, nämlich im Hinblick auf einen jeweiligen Einsatzort dieser Überwachungseinrichtung variabel und ortsungebunden. In dieser Hinsicht besteht ein wichtiges Merkmal der Erfindung darin, dass ein Bewegen bzw. Verfahren der mobilen Überwachungseinrichtung auf einer im Wesentlichen ebenen Fläche unabhängig von vorgegebenen Fahrbahnen ist und keine Schienenbindung hat. Somit ist der Aktionsbereich der mobilen Überwachungseinrichtung frei auf den Ebenen bzw. ebenen Fläche einer hüttentechnischen Anlage gegeben. Zu diesem Zweck weist diese Überwachungseinrichtung einen fahrbaren Untersatz auf, der mit Hilfe eines Motors und vorzugsweise ferngesteuert von einem Leitstand der Anlage auf einer im Wesentlichen ebenen Fläche verfahren werden kann. Hierbei werden die Bildsignale der ersten Kamera und ggf. weitere aufgenommene Messsignale insbesondere drahtlos an eine Auswertungs- oder Darstellungseinheit gesendet, die im Leitstand der zu überwachenden hüttentechnischen Anlage vorgesehen sein kann. Dies bedeutet, dass ein von zumindest der ersten Kamera aufgenommenes Bild in den Leitstand der hüttentechnischen Anlage übermittelt wird, wobei dann dem Bedienpersonal dieses Bild zur Bedienung, Beobachtung und Überwachung der Anlage zur Verfügung gestellt wird.

Mit Hilfe der Erfindung wird der Vorteil erreicht, dass für das Bedienpersonal der Anlage in flexibler bzw. variabler Weise eine Überwachung und Fernbedienung der Anlage aus einem gesicherten und geschützten Bereich, z.B. von dem Leitstand aus möglich ist. Mit Unterstützung der Bilder zumindest der ersten Kamera können insbesondere gefahrenträchtige Steuerfunktionen mit einer hohen Betriebssicherheit, z.B. aus dem Leitstand der Anlage heraus, ausgeführt werden, was ansonsten - bei herkömmlichen Anlagen - die Anwesenheit von Personen bzw. Bedienpersonal in unmittelbarer Nähe eines Gefährdungsbereichs der Anlage erforderlich und damit ggf. nicht durchführbar macht. Anders ausgedrückt, werden beim Einsatz der vorliegenden Erfindung Handlungen des Bedienpersonals in Gefährdungsbereichen der Anlage, d.h. im Bereich von Gefahrenquellen (z.B. Bereiche mit hohen Umgebungstemperaturen, Bereiche mit dem Risiko von unbeabsichtigt ausbrechendem flüssigem heißen Stahl, Bereiche unterhalb von hängenden bzw. schwebenden Lasten von hüttentechnischen Einrichtungen) vermieden.

Durch den fahrbaren Untersatz der mobilen Überwachungseinrichtung ist es für das Bedienpersonal von dem Leitstand der Anlage aus möglich, jegliche relevanten Bereiche einer zu überwachenden hüttentechnischen Anlage - je nach Bedarf - gezielt zu inspizieren, und hierbei diese Bereiche visuell, akustisch und/oder in Bezug auf die Feststellung von bestimmten Gaskonzentrationen in der Umgebung dieser Bereiche gezielt zu überprüfen. Auf Grundlage dessen können dann z.B. gezielte Komponenten der hüttentechnischen Anlage in diesen Bereichen vorzugsweise mittels einer Fernsteuerung angesteuert werden.

In vorteilhafter Weiterbildung der Erfindung kann die mobile Überwachungseinrichtung insbesondere drahtlos von einem Leitstand der hüttentechnischen Anlage aus ferngesteuert werden. Eine solche Fernsteuerung umfasst auch eine gezielte Ansteuerung der zumindest ersten Kamera, z.B. die Einstellung des Bildbereichs der ersten Kamera in Bezug auf eine vorbestimmte Richtung und/oder in Bezug auf einen Fokus hinsichtlich eines zu überwachenden Bereichs der hüttentechnischen Anlage. Hierbei werden die Bilddaten der ersten Kamera, wie vorstehend bereits erläutert, an den Leitstand übertragen und dort für das Bedienpersonal zwecks einer Überwachung der Anlage für das Bedienpersonal bereitgestellt. Eine solche Art der Fernsteuerung der mobilen Überwachungseinrichtung steht in Einklang mit deren erläuterten variablen Verfahrbarkeit auf jeglichen Ebenen der zu überwachenden hüttentechnischen Anlage.

In vorteilhafter Weiterbildung der Erfindung kann die zumindest erste Kamera integrierte Funktionen aufweisen. Dies bedeutet, dass mittels dieser ersten Kamera sowohl ein zu überwachender Bereich der hüttentechnischen Anlage als auch ein Umgebungsbereich der mobilen Überwachungseinrichtung in Richtung von deren Fahrtstrecke beobachtet werden. Somit kann ein Fahrtbetrieb der mobilen Überwachungseinrichtung ebenfalls mit Hilfe der ersten Kamera insbesondere von dem Leitstand der hüttentechnischen Anlage aus ferngesteuert werden. Dies führt zu dem Vorteil, dass in der mobilen Überwachungseinrichtung eine reduzierte Anzahl von Kameras vorgesehen sind.

Nach einer alternativen Ausführungsform der Erfindung kann vorgesehen sein, dass die mobile Überwachungseinrichtung eine zweite Kamera aufweist, mit der ein Umgebungsbereich der mobilen Überwachungseinrichtung in Richtung von deren Fahrtstrecke auf der ebenen Fläche beobachtet wird. Hierbei wird dann ein zu überwachender Bereich der hüttentechnischen Anlage ausschließlich mittels der ersten Kamera beobachtet. Dies führt zu dem Vorteil, dass ggf. ein gezieltes Zoomen mit der ersten Kamera z.B. in einer Richtung nach oben möglich ist, währenddessen die mobile Überwachungseinrichtung weiterhin auf der ebenen Fläche verfahren wird, was unter Verwendung der zweiten Kamera realisiert wird.

In vorteilhafter Weiterbildung der Erfindung kann die mobile Überwachungseinrichtung auch zumindest ein Tonmessgerät (z.B. ein Mikrofon) aufweisen, dessen Signale an den Leitstand der hüttentechnischen Anlage übertragen werden. Hierbei ist es zweckmäßig, wenn die Signale des Tonmessgerätes im Leitstand der hüttentechnischen Anlage als Akustiksignal bereitgestellt werden. Ein solches Tonmessgerät kann in die zumindest erste Kamera integriert sein, nach Art einer an sich bekannten Fernsehkamera. Mit Hilfe eines solchen Tonmessgerätes kann eine Geräuschentwicklung an oder in der Anlage (z.B. Lichtbogenzündungen oder Lichtbogenüberschläge) festgestellt werden, wobei dann entsprechende Signale dem Bedienpersonal im Leitstand als Akustiksignal zur Verfügung gestellt werden, um den Prozess der Anlage zu beurteilen und eine evt. Gefährdung zu erkennen.

In vorteilhafter Weiterbildung kann die mobile Überwachungseinrichtung einen oberen Teil aufweisen, in den zumindest die erste Kamera integriert ist. Dieser obere Teil kann relativ zu einem unteren Teil der mobilen Überwachungseinrichtung verdreht werden, z.B. in einem Winkel von bis zu 360°. Durch ein entsprechendes Verdrehen des oberen Teils ist somit eine "Rundum"-Beobachtung im Umfeld der mobilen Überwachungseinrichtung gewährleistet.

In vorteilhafter Weiterbildung der Erfindung kann in oder an dem oberen Teil der mobilen Überwachungseinrichtung zumindest eine weitere Messeinheit vorgesehen sein, um weitere Messsignale der hüttentechnischen Anlage und/oder deren Umgebung aufzunehmen. Hierbei ist es zweckmäßig, wenn diese weitere Messeinheit ebenfalls insbesondere drahtlos mit dem Leitstand der hüttentechnischen Anlage verbunden ist und auf einen zu überwachenden Bereich dieser Anlage ausgerichtet werden kann. Entsprechend ist es möglich, mit dieser weiteren Messeinheit einen Betriebszustand der hüttentechnischen Anlage zu überwachen.

Bei der vorstehend genannten weiteren Messeinheit der mobilen Überwachungseinrichtung kann es sich um folgende Geräte bzw. Komponenten handeln:
- Wärmebildkamera, mittels der eine wärmetechnische Betrachtung bzw. Analyse von Behältern der hüttentechnischen Anlage durchgeführt wird, die mit heißem und insbesondere flüssigen Material gefüllt sind. Beispiele für diese Behälter sind: Pfannen, Konverter, Zwischenbehälter, Reduktionsöfen, Lichtbogenöfen, Pfannenöfen, RH-Anlagen, Vakuumanlagen. Diesbezüglich wird darauf hingewiesen, dass es sich bei einer Wärmebildkamera nach der vorliegenden Erfindung um eine thermografische Kamera handelt.
- Infrarot-Pyrometer, mit dem Oberflächentemperaturmesswerte von Komponenten der hüttentechnischen Anlage (z.B. Elektrodentemperatur, Deckeltemperaturen, Bodentemperaturen), von mit einer solchen Anlage erzeugten Produkten (z.B. Brammen) und/oder von flüssigen Schmelzen bzw. Schlacken festgestellt werden.
- Gas-Messgerät, mit dem die Konzentration eines bestimmten Gases in der Umgebung der hüttentechnischen Anlage und vorzugsweise in unmittelbarer Nähe der mobilen Überwachungseinrichtung festgestellt werden kann. Zu den Gasen, die mit einem solchen Gas-Messgerät detektiert werden können, gehören insbesondere Argon (Ar), Ammoniak (NH3), Kohlendioxid (CO2), Kohlenmonoxid (CO), Chlor (CI2), Chlordioxid (ClO2), Wasserstoff (H2), Chlorwasserstoff (HCl), Cyanwasserstoff (HCN), Schwefelwasserstoff (H2S), Methan (CH4), Stickstoffmonoxid (NO), Stickstoffdioxid (NO2), Sauerstoff (O2), Phosphin (PH3) und/oder Schwefeldioxid (SO2).

In vorteilhafter Weiterbildung der Erfindung kann eine Schutzhaube vorgesehen sein, mit der die weitere Messeinheit, die in dem oberen Teil der mobilen Überwachungseinrichtung vorgesehen ist, gegenüber der Umgebung abgeschirmt wird. Falls diese weitere Messeinheit in Form einer Wärmebildkamera ausgebildet ist, ist es zweckmäßig, wenn diese Schutzhaube zumindest in Bezug auf Wärmestrahlung bzw. IR-Strahlung durchlässig ist. Die Schutzhaube kann aus einem Sicherheitsglas bestehen oder zumindest teilweise ein solches Sicherheitsglas aufweisen.

Eine gewünschte Temperaturfestigkeit der mobilen Überwachungseinrichtung kann dadurch erreicht werden, dass alle daran angebrachten Kameras und/oder Messgeräte temperaturfest ausgebildet sind, z.B. für eine Dauertemperatur von 40 °C oder auch höhere Temperaturen. Zu diesem Zweck kann vorgesehen sein, dass die Oberflächen der mobilen Überwachungseinrichtung und der daran angebrachten Kameras bzw. Messgeräte jeweils aus hitzefestem aluminisierten Para-Aramid ausgebildet sind.

Eine Hitzebeständigkeit für den fahrbaren Untersatz der mobilen Überwachungseinrichtung und der daran vorgesehenen Räder oder Fahrketten kann durch eine Beschichtung mit hitzebeständigem Polyesterharz erreicht werden. Alternativ hierzu ist es möglich, diese Räder bzw. Fahrketten zumindest teilweise aus einem solchen hitzebeständigen Polyesterharz auszubilden.

Nach einer weiteren Ausgestaltung der vorliegenden Erfindung, der eine eigenständige Bedeutung zukommt, ist eine mobile Überwachungseinrichtung vorgesehen, die sich insbesondere zum Einsatz bei bzw. in einer hüttentechnischen Anlage eignet. Eine solche mobile Überwachungseinrichtung umfasst einen Untersatz mit Rädern oder Fahrketten, und einen Motor zum Antrieb der Räder oder Fahrketten, um damit auf einer insbesondere ebenen Fläche verfahren werden zu können. Des Weiteren weist eine solche mobile Überwachungseinrichtung zumindest eine erste Kamera auf, und ggf. noch weitere Kameras bzw. Messeinheiten, wie vorstehend an anderer Stelle bereits erläutert. Es ist ein Druckbehälter vorgesehen, der ein unter Druck stehendes Fluid enthält. Dieser Druckbehälter kann zweckmäßigerweise in dem Untersatz der Überwachungseinrichtung angeordnet bzw. aufgenommen sein. Der Motor kann mit Druckluft betrieben und mit dem Druckbehälter gekoppelt werden, so dass auf die Räder oder Fahrketten eine Antriebskraft ausgeübt wird. Ein solches Antriebsprinzip des Motors gewährleistet eine Mobilität für die Überwachungseinrichtung insbesondere für den Fall, dass andere Energiequellen, z.B. Batterien oder Akkus, in solcher Weise erschöpft sind, dass hiermit ein weiterer Antrieb der Räder bzw. Fahrketten nicht möglich ist.

Nach einer Ausführungsform der zuletzt genannten Überwachungseinrichtung ist der Druckbehälter mit Mitteln ausgestattet, um das Fluid permanent aus dem Druckbehälter zu entnehmen und auf eine äußere Linse des Objektivs zumindest der ersten Kamera zu richten. Dies hat zur Folge, dass Partikel (z.B. Schmutzpartikel, Staub oder dergleichen), die auf der Linse anhaften bzw. sich dort ablagern können, durch das unter Druck stehende und entsprechend auf die Linse gerichtete Fluid weggeblasen werden. Somit ist gewährleistet, dass durch das Objektiv der Kamera stets ein "freier Blick" möglich ist und damit Bildbereiche von der hüttentechnischen Anlage ohne jegliche Einschränkung erzeugt werden.
Nachstehend ist ein Ausführungsbeispiel der Erfindung anhand einer schematisch vereinfachten Zeichnung im Detail beschrieben.

Es zeigen:
- Fig. 1: eine prinzipiell vereinfachte Seitenansicht einer hüttentechnischen Anlage, bei der die vorliegende Erfindung eingesetzt wird,
- Fig. 2: eine prinzipiell vereinfachte Draufsicht auf die hüttentechnische Anlage von Fig. 1,
- Fig. 3: eine prinzipiell vereinfachte Seitenansicht einer mobilen Überwachungseinrichtung, mit der die vorliegende Erfindung bei einer Anlage von Fig. 1 durchgeführt wird,
- Fig. 4: eine Ansicht von vorne der mobilen Überwachungseinrichtung von Fig. 3, und
- Fig. 5: eine Draufsicht auf die mobile Überwachungseinrichtung von Fig. 3.

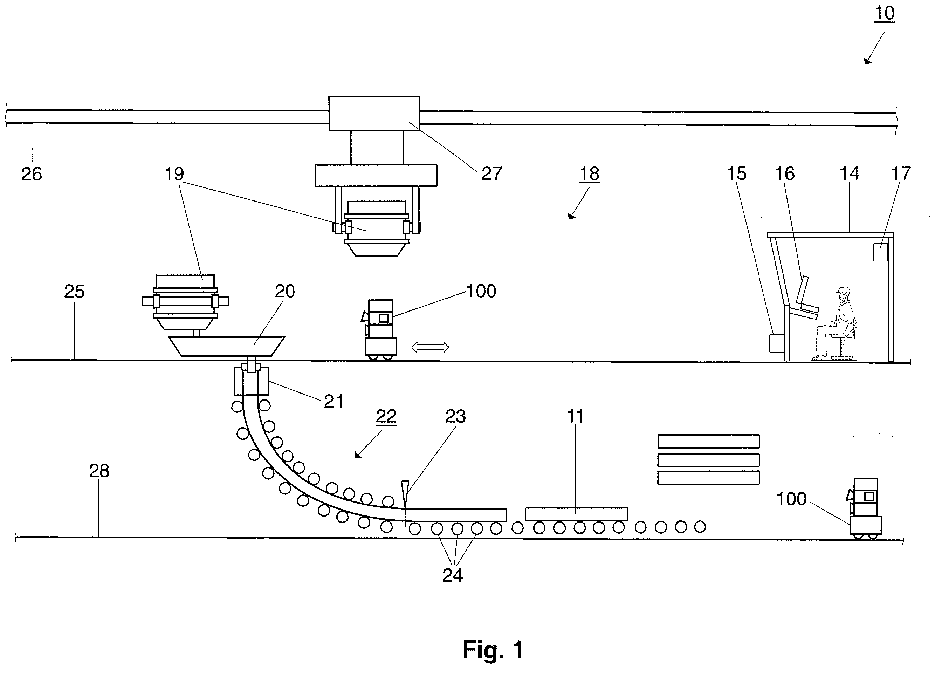

Nachstehend ist unter Bezugnahme auf die Fig. 1 bis 5 eine bevorzugte Ausführungsform eines Verfahrens und der Verwendung einer mobilen Überwachungseinrichtung 100 zum Betrieb einer hüttentechnischen Anlage 10 gemäß der vorliegenden Erfindung erläutert. Gleiche Merkmale in der Zeichnung sind jeweils mit gleichen Bezugszeichen versehen. An dieser Stelle wird gesondert darauf hingewiesen, dass die Zeichnung lediglich vereinfacht und insbesondere ohne Maßstab dargestellt ist.

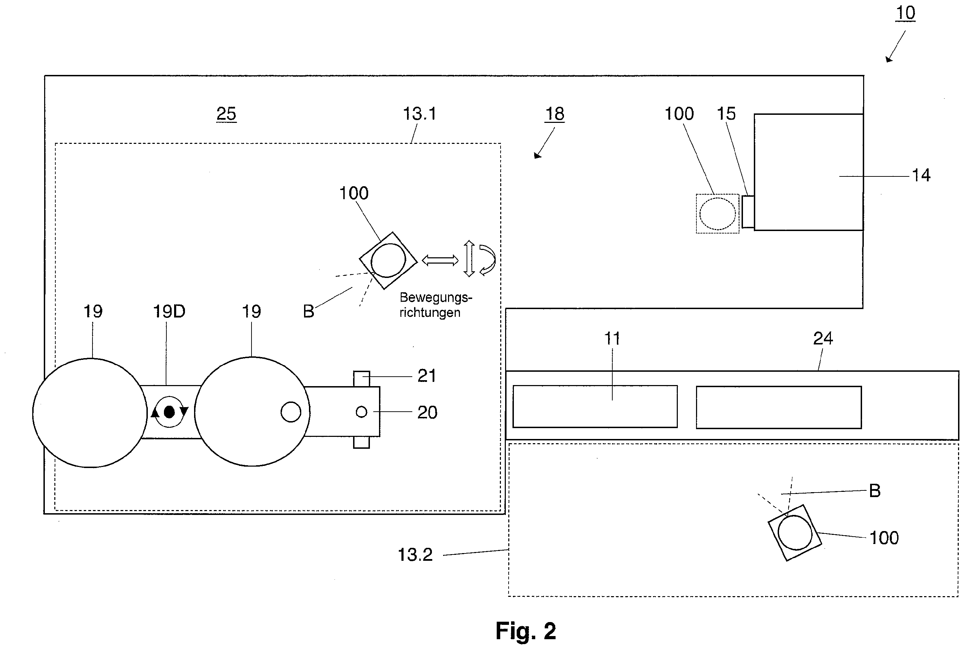

Ausweislich der Darstellungen in Fig. 1 und Fig. 2 kann eine hüttentechnische Anlage 10 eine Stranggießanlage 18 umfassen, bei der mit Hilfe einer Pfanne 19 und einem Zwischenbehälter 20 eine Kokille 21 mit heißem Metall, vorzugsweise Stahl, befüllt wird. Unterhalb der Kokille 21 ist eine Strangführung 22 angeordnet, entlang der ein Metallstrang nach dem Austreten aus der Kokille 21 geführt wird. In der Strangführung 22 kann eine Trenneinrichtung 23 angeordnet sein. Im Anschluss an die Strangführung 22 ist ein Rollgang 24 vorgesehen, auf dem ein mit der Anlage 10 hergestelltes metallisches Produkt 11, z.B. eine Bramme, transportiert wird.

Oberhalb der Kokille 21 ist an einer Kranbahn 26 ein Kran 27 angebracht, mit dem die Pfanne 19 - bei Bedarf - gehalten bzw. verfahren wird.

Zum Betrieb der hüttentechnischen Anlage 10 ist ein Leitstand 14 vorgesehen, der für ein Bedienpersonal einen geschützten und somit sicheren Raum bildet. Der Leitstand 14 ist mit einer Basisstation 15 ausgerüstet, welche die Funktion einer Daten -/Empfänger -/Ladestation übernimmt, was nachstehend noch gesondert erläutert ist. Des Weiteren sind innerhalb des Leitstands 14 ein Monitor 16 und ein Lautsprecher 17 vorgesehen, was für den Betrieb bzw. eine Steuerung von Anlagenkomponenten der Anlage 10 hilfreich ist.

In der Draufsicht von Fig. 2 sind jeweils mit gestrichelten Linien sogenannte Gefährdungsbereiche der Anlage 10 symbolisiert. Ein Gefährdungsbereich 13.1 besteht angrenzend zum Pfannendrehturm 19D, mit dem die Pfanne 19 in Position bezüglich des Zwischenbehälters 20 gebracht wird. Ein weiterer Gefährdungsbereich 13.2 besteht angrenzend zum Rollgang 24, auf dem eine Bramme 11 transportiert wird.

Die mobile Überwachungseinrichtung 100 dient zur gezielten Überwachung von bestimmten Bereichen der Anlage 10. Die Überwachungseinrichtung 100 lässt sich auf einer vorzugsweise im Wesentlichen ebenen Fläche 12 frei verfahren. Bei dieser ebenen Fläche 12 kann es sich um die Gießbühne 25 der Anlage 10 handeln, oder auch um die Ebene des Brammenauslaufs 28 bzw. den Hallenboden einer Halle, in der die Anlage 10 installiert ist. Bezüglich einer Verfahrbarkeit der mobilen Überwachungseinrichtung 100 auf der ebenen Fläche 12 ist von Bedeutung, dass dies ohne Bindung an eine feste Fahrbahn oder Schienen möglich ist. Somit kann die mobile Überwachungseinrichtung 100 - ihrer Bezeichnung entsprechend - insbesondere in den vorstehend genannten Gefährdungsbereichen 13.1, 13.2 der Anlage 10 frei bewegt werden.

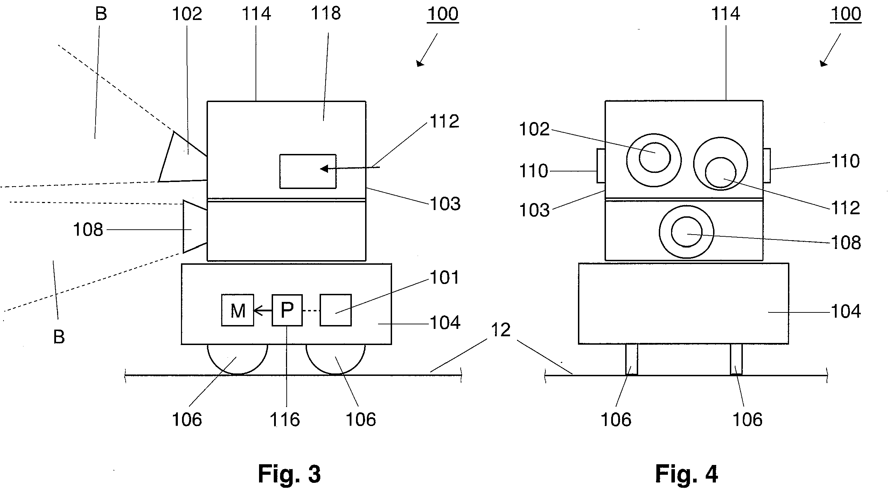

Nachstehend sind der Aufbau der mobilen Überwachungseinrichtung 100 und deren Komponenten anhand der Fig. 3-5 im Detail erläutert:
Die mobile Überwachungseinrichtung 100 umfasst einen Untersatz 104, der mit Rädern 106 ausgestattet ist. Zumindest eines dieser Räder 106, vorzugsweise alle Räder 106, sind mit einem Motor M gekoppelt, wodurch ein Bewegen der Überwachungseinrichtung 100 auf der Fläche 12 realisiert wird. Der Motor M kann entweder als Elektromotor ausgebildet sein, oder auch mittels Druckluft betrieben werden, was nachstehend noch gesondert erläutert ist.

Die mobile Überwachungseinrichtung 100 umfasst mehrere Kameras und Messgeräte, mit denen eine Umgebung der Überwachungseinrichtung 100 beobachtet und analysiert werden kann. Hierzu gehören eine erste Kamera 102, eine zweite Kamera 108, ein Tonmessgerät 110 und zumindest eine weitere Messeinheit 112, die alle an einem oberen Teil 103 der Überwachungseinrichtung 100 vorgesehen sein können. Für eine gewünschte Temperaturfestigkeit dieser Komponenten kann der obere Teil 103 mit einer Schutzhaube 114, die z.B. aus Sicherheitsglas besteht, ausgerüstet sein.

Die erste Kamera 102 dient zu dem Zweck, einen bestimmten Bereich der Anlage 10 zumindest visuell gezielt zu überwachen.

Die zweite Kamera 108 dient zu dem Zweck, einen Umgebungsbereich der Überwachungseinrichtung 100 in Richtung von deren Fahrtstrecke auf der ebenen Fläche 12 zu beobachten.

Die von der ersten Kamera 102 und von der zweiten Kamera 108 aufgenommenen Bilder werden drahtlos an den Leitstand 14 der Anlage 10 übertragen. Für diese drahtlose Videoübertragung wird für die Zwecke der vorliegenden Erfindung eine Bildrate von ≤ 25 Bildern/Sekunde als ausreichend angesehen.

Die weitere Messeinheit 112 kann aus einer Wärmebildkamera, einem Infrarot-Pyrometer oder aus einem Gas-Messgerät gebildet sein. Diesbezüglich ist es auch möglich, mehrere solcher Geräte an dem oberen Teil 103 der mobilen Überwachungseinrichtung 100 vorzusehen.

An dieser Stelle wird gesondert darauf hingewiesen, dass eine Neigung der ersten Kamera 102 individuell eingestellt werden kann, um deren Bildbereich B gezielt auf Teile bzw. Komponenten der Anlage 10 auszurichten. Durch die Einstellung der Neigung der ersten Kamera 102 wird ein Bildbereich B hiervon auf den zu überwachenden Bereich der Anlage 10 ausgerichtet, z.B. in einer Richtung nach schräg oben, wie es in der Darstellung von Fig. 3 veranschaulicht ist.

Auch für die zweite Kamera 108 gilt, dass deren Neigung und somit der Bildbereich B dieser Kamera gezielt eingestellt werden kann, z.B. in Richtung der Fläche 12, auf welcher die mobile Überwachungseinrichtung 100 bewegt bzw. verfahren wird, oder in einer Richtung nach vorne, in der die Fahrtrichtung der Überwachungseinrichtung 100 liegt.

Die Steuersignale zur Einstellung der Kameras 102, 108 können vom Leitstand 14 der Anlage 10 aus gegeben werden, und werden nach einem Empfang durch die Steuereinheit 101 geeignet an die Kameras 102, 108 weitergeleitet.

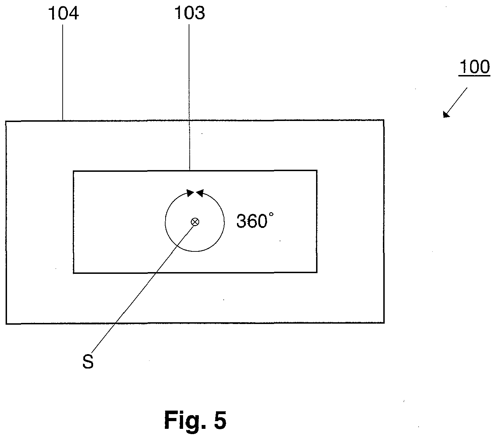

Der obere Teil 103 der mobilen Überwachungseinrichtung 100 ist um eine vertikale Schwenkachse S drehbar gelagert, und kann somit relativ zum Untersatz 104 verdreht werden. Die Draufsicht von Fig. 5 verdeutlicht, dass der obere Teil 103 sich relativ zum Untersatz 104 um 360° verdrehen lässt. In dieser Weise lassen sich die erste Kamera 102, das Tonmessgerät 110 und die weitere Messeinheit 112 gezielt in Richtung von bestimmten Bereichen der Anlage 10 ausrichten.

Die mobile Überwachungseinrichtung 100 ist mit einer Steuereinheit 101 ausgerüstet. Diese Steuereinheit 101 verfügt über eine Fernsteuerung, die drahtlos mit einer Steuerung des Leitstands 14 in Verbindung steht. In dieser Weise können sowohl der Fahrtbetrieb der mobilen Überwachungseinrichtung 100 als auch deren Kameras und Messgeräte von dem Leitstand 14 aus ferngesteuert werden. Dies gilt auch für die erläuterte Verdrehbarkeit des oberen Teils 103 relativ zum Untersatz 104. Entsprechend kann die mobile Überwachungseinrichtung 100 insbesondere in einem Gefährdungsbereich 13.1, 13.2 der Anlage 10 in verschiedenen Bewegungsrichtungen frei verfahren werden, was durch die Pfeile in Fig. 2 symbolisiert ist.

Die mobile Überwachungseinrichtung 100 umfasst einen Druckbehälter 116 (vgl. Fig. 3), der vorzugsweise innerhalb des Untersatzes 104 aufgenommen ist. Dieser Druckbehälter 116 enthält ein Fluid, vorzugsweise Luft, das bzw. die unter Druck steht, was in der Fig. 3 durch den Buchstaben "P" symbolisiert ist. Die Position, an welcher der Druckbehälter 116 innerhalb des Untersatzes 104 aufgenommen ist, ist von außen (z.B. durch eine verschließbare Klappe) leicht zugänglich, um den Druckbehälter 116 - bei Bedarf bzw. Leerstand - gegen einen "frischen" Druckbehälter austauschen zu können

Der Druckbehälter 116 ist mit (nicht gezeigten) Mitteln ausgestattet, um das Fluid permanent aus dem Druckbehälter 116 zu entnehmen und auf eine äußere Linse des Objektivs der Kameras 102, 108 und/oder auf das Mikrofon 110 und/oder auf die weitere Messeinheit 112 zu richten, so dass darauf anhaftende Partikel weggeblasen werden. In dieser Weise kann eine Verschmutzung der genannten Geräte durch Ablagerung von Staub oder dergleichen wirkungsvoll und mit einfachen Mitteln verhindert werden. Die genannten Mittel, mit denen das Fluid aus dem Druckbehälter 116 entnommen und auf die Kameras 102, 108, das Mikrofon 110 und/oder die weitere Messeinheit 112 gerichtet wird, umfassen geeignete Druck- bzw. Verbindungsleitungen, ggf. Ventile und Düsen, mit denen das unter Druck stehende Fluid gezielt auf die genannten Geräte geblasen wird.

Die gestrichelte Linie zwischen dem Druckbehälter 116 und der Steuereinheit 101 (vgl. Fig. 3) symbolisiert, dass der Druckbehälter 116 und hieran vorgesehene Ventile mit Signalen von der Steuereinheit 101 geeignet angesteuert werden können, in Bezug auf eine gezielte Entnahme des Fluids aus dem Druckbehälter 116.

Der Motor M kann bei Bedarf mit dem Druckbehälter 116 gekoppelt werden, zwecks Antrieb des Motors M mittels des Fluids unter Druck. Dies ist in Fig. 3 durch einen Pfeil symbolisiert.

Die mobile Überwachungseinrichtung 100 ist mit weiterer Antriebstechnik, Lenktechnik, Batterietechnik (z.B. unter Verwendung von Akkus) und Ladetechnologien ausgestattet, was zum Stand der Technik gehörend angesehen wird und deshalb an dieser Stelle nicht näher erläutert ist. Die Leistungsversorgung des Motors M, der Kameras 102, 108 und der zumindest einen weiteren Messeinheit 112 erfolgt ebenfalls über Batterien oder ladbare Akkus. Zum Laden von Akkus kann die mobile Überwachungseinrichtung 100 an die Basisstation 15 angedockt werden, was in der Fig. 2 durch gestrichelte Linien symbolisiert ist.

Ergänzend wird darauf hingewiesen, dass die an dem Leitstand 14 vorgesehene Basisstation 15 mit einer Sende- und Empfangseinheit ausgestattet ist. Entsprechend können von der Basisstation 15 einerseits Steuerbefehle an die Steuereinheit 101 der mobilen Überwachungseinrichtung 100 gesendet werde, und andererseits Signale von der mobilen Überwachungseinrichtung 100 und deren Geräten empfangen werden.

Die Erfindung funktioniert nun wie folgt:
Im Betrieb der Anlage 10 wird die mobile Überwachungseinrichtung 100 drahtlos von dem geschützten Leitstand 14 aus ferngesteuert. Hierbei steuert das Bedienpersonal die Überwachungseinrichtung 100 für das Bewegen auf der Fläche 12 mit Hilfe des Kamerabildes der zweiten Kamera 108, das auf dem Monitor 16 angezeigt wird. Das Kamerabild der zweiten Kamera 108 zeigt dem Bedienpersonal die Situation in der Bewegungsrichtung der Überwachungseinrichtung 100, so dass auf Grundlage dessen eine Fahrtrichtung nach vorne, hinten, rechts oder links eingestellt werden kann.

Sobald die mobile Überwachungseinrichtung 100 ihren gewünschten Beobachtungs- bzw. Messort erreicht hat, kann das Bedienpersonal z.B. die erste Kamera 102 auf einem bestimmten Bereich der Anlage 10 ausrichten, und ggf. für das Objektiv dieser ersten Kamera 102 eine Zoom-Funktion einstellen. Dieses Ausrichten der ersten Kamera 102 erfolgt ebenfalls ferngesteuert von dem Leitstand 14 aus. Beispielsweise kann bei stehendem Untersatz 14 der obere Teil 103 durch ein Verdrehen um die Schwenkachse S gezielt auf einen zu überwachenden Bereich der Anlage eingestellt werden.

Das Bedienpersonal hat nun die Möglichkeit, erforderliche Betriebsprozesse der Anlage 10, vorzugsweise Fahr-, Dreh-, Hebe- oder Senkbewegungen oder Öffnungs- /Schließvorgänge von hüttentechnischen Einrichtungen, mittels der eingestellten Bildbereiche der ersten Kamera 102 fernzusteuern. Beispielsweise können nun Prozesssteuervorgänge der Anlage 10 ferngesteuert eingeleitet, überwacht oder gestoppt werden, ohne dass sich dabei eine Person in den Gefährdungsbereichen 13.1, 13.2 aufhält. Entsprechend kann eine Beobachtung bzw. Visualisierung der Prozesssituation mit Hilfe der Erfindung erfolgen, wobei eine Steuerfunktion des Prozesses auch über andere Systeme erfolgen kann.

Insbesondere im Betrieb der Anlage 10 wird ein Verschmutzen der äußeren Linsen der Objektive der Kameras 102, 108 wirkungsvoll dadurch verhindert, dass das Fluid, vorzugsweise Druckluft, permanent aus dem Druckbehälter 116 entnommen und gezielt auf die Linsen gerichtet wird. In Folge dessen werden (Schmutz-)Partikel, die sich ggf. auf der Linse ablagern, weggeblasen bzw. weggespült.

Das Fluid, das in den Druckbehälter 116 enthalten ist, kann auch dazu verwendet werden, einen Innenraum 118 (vgl. Fig. 3) der mobilen Überwachungseinrichtung 100 permanent mit einem Überdruck zu beaufschlagen. Dies resultiert darin, dass Partikel aus der Umgebung der Überwachungseinrichtung 100 nicht in deren Innen-raum 118 hineingelangen können bzw. hieraus ferngehalten werden. Diesbezüglich wird darauf hingewiesen, dass als "Innenraum" im Sinne der vorliegenden Erfindung diejenigen Bereiche der mobilen Überwachungseinrichtung 100 zu verstehen sind, in denen Kameras 102, 108, Messgeräte 110, 112 oder sonstige Einrichtungen zum Betrieb der mobilen Überwachungseinrichtung 100, z.B. die Steuereinheit 101 und der Motor M, aufgenommen sind. Auch das Gehäuse des Untersatzes 104 zählt zu diesem Innenraum 118. Im Ergebnis ist durch die vorstehend genannte Druckbeaufschlagung des Innenraums 118 mit dem Fluid aus dem Druckbehälter 116 gewährleistet, dass sich auf den einzelnen Komponenten der Überwachungseinrichtung 100, die in dem Innenraum 118 angeordnet bzw. aufgenommen sind, kein Staub o. ä. Verschmutzung ablagert.

Mittels der Erfindung können in einer hüttentechnischen Anlage vielfältige Prozesse gesteuert werden, beispielsweise:
- Das Öffnen oder Schließen von Verschlüssen von Metallbehältern mit flüssigen heißen Schmelzen oder Schlackenmaterial, z.B. Abstichöffnungen an Pfannen, Reduktionsöfen, Elektrolichtbogenöfen, Konvertern, oder auch Stopfen oder Schieber an Zwischenbehältern:
- Bewegungen von Manipulatoren zur Probenentnahme, zur Temperaturmessungen, zu Markierungen von gegossenem Material oder für Ankoppelvorgänge von Schattenrohren und Gießrohren;
- Lanzensteuerungen zur Einblasung von Sauerstoff in Konverterprozessen.

Die mobile Überwachungseinrichtung 100 ist für den Betrieb in temperaturbelasteter Umgebung ausgelegt. Hierzu sind alle Ausrüstungselemente der Überwachungseinrichtung 100, d.h. alle der genannten Kameras und Messgeräte, entsprechend so ausgeführt, dass einer dauerhaft wirkenden Umgebungstemperatur von z.B. 50 °C (oder mehr) standgehalten wird. Zu diesem Zweck können Feuerschutzmaterialien aus aluminisierten Para-Aramid oder hitzebeständigen Polyesterharz eingesetzt werden.

Die mobile Überwachungseinrichtung 100 kann im Sinne der vorliegenden Erfindung bei einer hüttentechnischen Anlage eingesetzt werden auf Gießbühnen, Ofenbühnen, Hüttenfluren, unterhalb von schwebenden Lasten (insbesondere heiße und flüssige Metallschmelzen) oder in sonstigen befahrbaren Sicherheitsbereichen einer solchen Anlage. Jedenfalls kann die mobile Überwachungseinrichtung auf allen befahrbaren Flächen oder Rampen eingesetzt werden, die einen Neigungsgrad von maximal ± 0,5 m auf 1 m ebener Fahrtstrecke aufweisen.

Wie vorstehend bereits erläutert, kann der Motor M als Elektromotor ausgebildet sein, der von einer Batterie bzw. einem Akku mit Energie gespeist wird. Als "Notfahrhilfe" kann vorgesehen sein, dass entweder dieser Motor M, oder ein separater (nicht gezeigte) Hilfsmotor, mit Druckluft betrieben werden kann. Zu diesem Zweck kann der Motor M mit dem Druckbehälter 116 gekoppelt werden, zwecks eines Antriebs mittels Druckluft. Beispielsweise kann dieses Antriebsprinzip für den Fall gewählt werden, dass die Batterien oder Akkus, die für den Elektromotor vorgesehen sind, nicht mehr genügend Kapazität aufweisen. Hierdurch ist für die Überwachungseinrichtung 100 eine "Mobilitäts- Reserve" sichergestellt, um in jedem Fall zur Basisstation 15 aus eigener Kraft zurückfahren zu können.

Für die bestimmungsgemäße Überwachung von Bereichen und Komponenten der Anlage 10 mittels der mobilen Überwachungseinrichtung 100 kommen wie erläutert verschiedene Bild - und Tonsignale von Videokameras (nämlich der ersten Kamera 102, der zweiten Kamera 108 und des Mikrofons 110) als auch die Signale von zumindest einer weiteren Messeinheit 112, bei der es sich um eine Wärmebildkamera, ein Infrarot-Pyrometer und/oder ein Gas-Messgerät handeln kann, zum Einsatz.

Schließlich darf darauf hingewiesen werden, dass mit der vorliegenden Erfindung auch mehrere mobile Überwachungseinrichtungen 100 gleichzeitig eingesetzt werden können, die z.B. alle von dem Leitstand 14 aus ferngesteuert werden. In dieser Weise ist es möglich, dass sich das Bedienpersonal von verschiedenen Bereichen der Anlage 10 gleichzeitig ein Bild machen bzw. diese Bereiche überwachen und analysieren kann, unter Verwendung einer mobilen Überwachungseinrichtung 100, die dann gezielt an einen bestimmten Bereich der Anlage 10 herangefahren wird. Der Einsatz von mehreren Überwachungseinrichtungen 100 ist auch deshalb von Vorteil, weil ggf. eine Wartung oder Reparatur für eine dieser Überwachungseinrichtungen 100 durchgeführt werden kann, ohne das deshalb ein Stillstand der gesamten Anlage 10 erforderlich ist.

### Bezugszeichenliste

- 10: Hüttentechnische Anlage
- 11: metallisches Produkt
- 12: ebene Fläche (der hüttentechnischen Anlage 10)
- 13.1, 13.2: Gefährdungsbereich (der hüttentechnischen Anlage 10)
- 14: Leitstand (der hüttentechnischen Anlage 10)
- 15: Basisstation (=Daten-/Empfänger-Ladestation)
- 16: Monitor
- 17: Lautsprecher
- 18: Stranggießanlage
- 19: Pfanne
- 19D: Pfannendrehturm
- 20: Zwischenbehälter
- 21: Kokille
- 22: Strangführung
- 23: Trenneinrichtung
- 24: Rollgang
- 25: Gießbühne/Hüttenflur
- 26: Kranbahn
- 27: Kran
- 28: Brammenauslauf / Hallenboden
- 100: mobile Überwachungseinrichtung
- 101: Steuereinheit
- 102: erste Kamera
- 103: oberer Teil
- 104: Untersatz
- 106: Räder
- 108: zweite Kamera
- 110: Tonmessgerät / Mikrophon
- 112: weitere Messeinheit
- 114: Schutzhaube
- 116: Druckbehälter (z.B. für Druckluft)
- B: Bildbereich (der Kamera 102)
- M: Motor
- S: Schwenkachse

## Patentansprüche

1. Verfahren zum Betrieb einer hüttentechnischen Anlage (10), bei dem eine Überwachungseinrichtung (100) mit zumindest einer ersten Kamera (102) eingesetzt wird, **dadurch gekennzeichnet, dass** die Überwachungseinrichtung (100) mobil ist, mit einem Druckluft-Motor angetrieben wird und im Bereich der hüttentechnischen Anlage (10) auf einer im Wesentlichen ebenen Fläche (12) frei verfahrbar ist,
und
**dass** zumindest ein erforderlicher Betriebsprozess der hüttentechnischen Anlage (10) auf Grundlage des eingestellten Bildbereichs (B) der ersten Kamera, mit dem ein Bereich der hüttentechnischen Anlage (10) beobachtet wird, ferngesteuert wird.

2. Verwendung einer mobilen Überwachungseinrichtung (100) zum Betrieb einer hüttentechnischen Anlage (10), wobei die Überwachungseinrichtung (100) zumindest eine erste Kamera (102) aufweist und zumindest ein erforderlicher Betriebsprozess der hüttentechnischen Anlage (10) auf Grundlage eines eingestellten Bildbereichs (B) der ersten Kamera (102), mit dem ein Bereich der hüttentechnischen Anlage (10) beobachtet wird, ferngesteuert wird.

3. Verwendung einer mobilen Überwachungseinrichtung (100) zum Betrieb einer hüttentechnischen Anlage (10) nach Anspruch 2, **dadurch gekennzeichnet, dass** die mobile Überwachungseinrichtung (100) im Bereich der hüttentechnischen Anlage (10) auf einer im Wesentlichen ebenen Fläche (12) frei verfahrbar ist.

4. Verfahren nach Anspruch 1 und/oder Verwendung nach Anspruch 3, **dadurch gekennzeichnet, dass** die mobile Überwachungseinrichtung (100) insbesondere drahtlos von einem Leitstand (14) der hüttentechnischen Anlage (10) ferngesteuert wird, wobei die Bilddaten der ersten Kamera (102) an den Leitstand (14) übertragen werden.

5. Verfahren und/oder Verwendung nach Anspruch 4, **dadurch gekennzeichnet, dass** die mobile Überwachungseinrichtung (100) einen Motor (M) und einen Untersatz (104) mit Rädern (106) oder Fahrketten aufweist, die auf der ebenen Fläche (12) abrollen, wobei zumindest ein Rad (106) oder zumindest eine Fahrkette mit dem Motor (M) gekoppelt und dadurch angetrieben ist.

6. Verfahren und/oder Verwendung nach Anspruch 4 oder 5, **dadurch gekennzeichnet, dass** mittels der ersten Kamera (102) sowohl ein Bereich der hüttentechnischen Anlage (10) als auch ein Umgebungsbereich der mobilen Überwachungseinrichtung (100) in Richtung von deren Fahrtstrecke auf der ebenen Fläche (12) beobachtet werden.

7. Verfahren und/oder Verwendung nach Anspruch 4 oder 5, **dadurch gekennzeichnet, dass** die mobile Überwachungseinrichtung (100) eine zweite Kamera (108) aufweist, mit der ein Umgebungsbereich der mobilen Überwachungseinrichtung (100) in Richtung von deren Fahrtstrecke auf der ebenen Fläche (12) beobachtet wird, wobei ein Bereich der hüttentechnischen Anlage (10) ausschließlich mittels der ersten Kamera (102) beobachtet wird.

8. Verfahren und/oder Verwendung nach Anspruch 6 oder 7, **dadurch gekennzeichnet, dass** die erste Kamera (102) von dem Leitstand (14) aus ferngesteuert wird, vorzugsweise, dass die Einstellung des Bildbereichs der ersten Kamera (102) in Bezug auf eine vorbestimmte Richtung und/oder in Bezug auf einen Fokus durch die Fernsteuerung mittels des Leitstands (14) veränderlich ist.

9. Verfahren und/oder Verwendung nach einem der Ansprüche 4 bis 8, **dadurch gekennzeichnet, dass** die mobile Überwachungseinrichtung (100) zumindest ein Tonmessgerät (110) aufweist, dessen Signale an den Leitstand (14) der hüttentechnischen Anlage (10) übertragen werden, vorzugsweise, dass die Signale des Tonmessgeräts (110) im Leitstand (14) der hüttentechnischen Anlage (10) als Akustiksignal bereitgestellt werden, und/oder weiter vorzugsweise, dass das Tonmessgerät (110) in die erste Kamera (102) integriert ist.

10. Verfahren und/oder Verwendung nach einem der Ansprüche 4 bis 9, **dadurch gekennzeichnet, dass** die mobile Überwachungseinrichtung (100) einen oberen Teil (103) aufweist, in den zumindest die erste Kamera (102) integriert ist, vorzugsweise, dass der obere Teil (103) der mobilen Überwachungseinrichtung (100) relativ zu einem unteren Teil davon um 360° verdrehbar angeordnet ist.

11. Verfahren und/oder Verwendung nach Anspruch 10, **dadurch gekennzeichnet, dass** in oder an dem oberen Teil (103) der mobilen Überwachungseinrichtung (100) zumindest eine weitere Messeinheit (112) vorgesehen ist, die insbesondere drahtlos mit dem Leitstand (14) der hüttentechnischen Anlage (10) verbunden ist und auf einen Bereich der hüttentechnischen Anlage (10) ausrichtbar ist, um mit dieser weiteren Messeinheit (112) einen Betriebszustand der hüttentechnischen Anlage (10) zu überwachen.

12. Verfahren und/oder Verwendung nach Anspruch 11, **dadurch gekennzeichnet, dass** die weitere Messeinheit (112) in Form einer Wärmebildkamera ausgebildet ist, mit der eine wärmetechnische Betrachtung von mit heißem flüssigen Material gefüllten Behältern der hüttentechnischen Anlage (10) durchgeführt wird.

13. Verfahren und/oder Verwendung nach Anspruch 11 oder 12, **dadurch gekennzeichnet, dass** die weitere Messeinheit (112) in Form eines Infrarot-Pyrometers ausgebildet ist, mit dem Oberflächentemperaturmesswerte von Komponenten der hüttentechnischen Anlage (10), von mit der hüttentechnischen Anlage (10) erzeugten Produkten und/oder von flüssigen Schmelzen bzw. Schlacken festgestellt werden.

14. Verfahren und/oder Verwendung nach einem der Ansprüche 11 bis 13, **dadurch gekennzeichnet, dass** eine Schutzhaube (114) vorgesehen ist, welche die weitere Messeinheit (112) gegenüber der Umgebung abschirmt, vorzugsweise, dass die Schutzhaube (114) in Bezug auf Wärmestrahlung und/oder IR-Strahlung durchlässig ist, weiter vorzugsweise, dass die Schutzhaube (114) aus Sicherheitsglas ausgebildet ist.

15. Verfahren und/oder Verwendung nach einem der Ansprüche 11 bis 14, **dadurch gekennzeichnet, dass** die weitere Messeinheit (112) in Form eines Gas-Messgerätes ausgebildet ist, mit dem die Konzentration eines bestimmten Gases in der Umgebung der hüttentechnischen Anlage (10) und vorzugsweise in unmittelbarer Nähe der mobilen Überwachungseinrichtung (100) festgestellt wird, vorzugsweise, dass das bestimmte Gas Argon (Ar), Ammoniak (NH3), Kohlendioxid (CO2), Kohlenmonoxid (CO), Chlor (CI2), Chlordioxid (ClO2), Wasserstoff (H2), Chlorwasserstoff (HCl), Cyanwasserstoff (HCN), Schwefelwasserstoff (H2S), Methan (CH4), Stickstoffmonoxid (NO), Stickstoffdioxid (NO2), Sauerstoff (O2), Phosphin (PH3) und/oder Schwefeldioxid (SO2) ist.

16. Verfahren und/oder Verwendung nach einem der Ansprüche 4 bis 15, **dadurch gekennzeichnet, dass** die mobile Überwachungseinrichtung (100) und vorzugsweise alle daran angebrachten Kameras (102, 108) und Messgeräte (110, 112) temperaturfest ausgebildet sind, vorzugsweise, dass diese temperaturfeste Ausbildung der mobilen Überwachungseinrichtung (100) und vorzugsweise der daran angebrachten Kameras (102, 108) und Messgeräte (110, 112) für eine Dauertemperatur von 40°C oder mehr ausgelegt ist.

17. Verfahren und/oder Verwendung nach Anspruch 16, **dadurch gekennzeichnet, dass** die Oberflächen der mobilen Überwachungseinrichtung (100) und vorzugsweise der daran angebrachten Kameras (102, 108) und Messgeräte bzw. - einheiten (110, 112) jeweils aus hitzefestem aluminisiertem Para-Aramid ausgebildet sind.

18. Verfahren und/oder Verwendung nach Anspruch 16 oder 17, **dadurch gekennzeichnet, dass** die Räder (106) oder die Fahrketten des Untersatzes (104) der mobilen Überwachungseinrichtung (100) mit hitzebeständigem Polyesterharz beschichtet sind und/oder zumindest teilweise aus hitzebeständigem Polyesterharz bestehen.

19. Verfahren und/oder Verwendung nach einem der Ansprüche 4 bis 18, **dadurch gekennzeichnet, dass** die ebene Fläche (12), auf der die mobile Überwachungseinrichtung (100) verfahren wird, sich in einem befahrbaren Gefährdungsbereich (13.1, 13.2) der hüttentechnischen Anlage (10) insbesondere in Form einer Gießbühne (25), einer Ofenbühne und/oder eines Hüttenflurs befindet.

20. Verfahren und/oder Verwendung nach einem der Ansprüche 4 bis 19, **dadurch gekennzeichnet, dass** die mobile Überwachungseinrichtung (100) einen Druckbehälter (116) aufweist, der ein unter Druck stehendes Fluid enthält und insbesondere innerhalb des Untersatzes (104) aufgenommen ist, wobei der Druckbehälter (106) mit Mitteln ausgestattet ist, um das Fluid permanent aus dem Druckbehälter (106) zu entnehmen und auf eine äußere Linse des Objektivs der ersten Kamera (102) und/oder der zweiten Kamera (108) zu richten, so dass auf der Linse anhaftende Partikel weggeblasen werden.

21. Verfahren und/oder Verwendung nach einem der Ansprüche 5 bis 20, **dadurch gekennzeichnet, dass** die mobile Überwachungseinrichtung (100) einen Druckbehälter (116) aufweist, der ein unter Druck stehendes Fluid enthält und insbesondere innerhalb des Untersatzes (104) aufgenommen ist, wobei der Motor (M) mit Druckluft betreibbar und mit dem Druckbehälter (116) koppelbar ist, so dass auf die Räder (106) oder die Fahrketten eine Antriebskraft ausgeübt wird.

22. Verfahren und/oder Verwendung nach einem der Ansprüche 4 bis 21, **dadurch gekennzeichnet, dass** ein Innenraum (118) der Überwachungseinrichtung (100), in dem die zumindest erste Kamera (102) und ggf. weitere Kameras (108) und/oder Meßeinheiten (110, 112) aufgenommen ist/sind, permanent mit Fluid aus dem Druckbehälter (116) beaufschlagt wird, so dass Partikel aus der Umgebung der Überwachungseinrichtung (100) aus deren Innenraum (118) ferngehalten werden.

23. Mobile Überwachungseinrichtung (100) insbesondere zur Verwendung bei einer hüttentechnischen Anlage (10), umfassend
einen Untersatz (104) mit Rädern (106) oder Fahrketten,
einen Motor (M) zum Antrieb der Räder (106) oder Fahrketten,
zumindest eine erste Kamera (102),
**dadurch gekennzeichnet,**
**dass** ein Druckbehälter (116) vorgesehen ist, der ein unter Druck (P) stehendes Fluid enthält und insbesondere innerhalb des Untersatzes (104) aufgenommen ist, wobei der Motor (M) mit Druckluft betreibbar und mit dem Druckbehälter (106) koppelbar ist, so dass auf die Räder (106) oder die Fahrketten eine Antriebskraft ausgeübt wird.

24. Mobile Überwachungseinrichtung (100) nach Anspruch 23, **dadurch gekennzeichnet, dass** der Druckbehälter (116) mit Mitteln ausgestattet ist, um das Fluid permanent aus dem Druckbehälter (106) zu entnehmen und auf eine äußere Linse des Objektivs der ersten Kamera (102) zu richten, so dass auf der Linse anhaftende Partikel weggeblasen werden.

25. Mobile Überwachungseinrichtung (100) nach Anspruch 23 oder 24, **dadurch gekennzeichnet, dass** ein Innenraum (118) der Überwachungseinrichtung (100), in dem die zumindest erste Kamera (102) und ggf. weitere Kameras und/oder Meßeinheiten (110, 112) aufgenommen ist/sind, permanent mit Fluid aus dem Druckbehälter (116) beaufschlagt wird, so dass Partikel aus der Umgebung der Überwachungseinrichtung (100) aus deren Innenraum (118) ferngehalten werden.

## Claims

1. Method of operating a metallurgical plant (10) in which a monitoring device (100) with at least a first camera (102) is used, **characterised in that** the monitoring device (100) is mobile, is driven by a compressed-air motor and in the region of the metallurgical plant (10) is freely movable on a substantially planar surface (12), and that at least one required operating process of the metallurgical plant (10) is remotely controlled on the basis of the set image range (B) of the first camera, by which a region of the metallurgical plant (10) is monitored.

2. Use of a mobile monitoring device (100) for operating a metallurgical plant (10), wherein the monitoring device (100) comprises at least a first camera (102) and at least one required operating process of the metallurgical plant (10) is remotely controlled on the basis of a set image range (B) of the first camera (102), by which a region of the metallurgical plant (10) is observed.

3. Use of a mobile monitoring device (100) for operating a metallurgical plant (10) according to claim 2, **characterised in that** the mobile monitoring device (100) is freely movable in the region of the metallurgical plant (10) on a substantially planar surface (12).

4. Method according to claim 1 and/or use according to claim 3, **characterised in that** the mobile monitoring device (100) is remotely controlled, particularly in wire-free manner, from a control station (14) of the metallurgical plant (10), wherein the image data of the first camera (102) is transferred to the control station (14).

5. Method and/or use according to claim 4, **characterised in that** the mobile monitoring device (100) comprises a motor (M) and a stand (104) with wheels (106) or tracks, which roll along the planar surface (12), wherein at least one wheel (106) or at least one track is coupled with the motor (M0 and thereby driven.

6. Method and/or use according to claim 4 or 5, **characterised in that** not only a region of the metallurgical plant (10), but also a surrounding region of the mobile monitoring device (100) in the direction of the travel path thereof on the planar surface (12) are observed by means of the first camera (102).

7. Method and/or use according to claim 4 or 5, **characterised in that** the mobile monitoring device (100) comprises a second camera (108), by which a surrounding region of the mobile monitoring device (100) in the direction of the travel path thereof on the planar surface (12) is observed, wherein a region of the metallurgical plant (10) is observed exclusively by means of the first camera (102).

8. Method and/or use according to claim 6 or 7, **characterised in that** the first camera (102) is remotely controlled from the control station (14), preferably **in that** the setting of the image region of the first camera (102) is variable with respect to a predetermined direction and/or with respect to a focus by the remote control by means of the control station (14).

9. Method and/or use according to any one of claims 4 to 8, **characterised in that** the mobile monitoring device (100) comprises at least one audio measuring apparatus (110), the signals of which are transmitted to the control station (14) of the metallurgical plant (10), preferably **in that** the signals of the audio measuring apparatus (110) are prepared in the control station (14) of the metallurgical plant (10) as acoustic signals and/or preferably in addition that the audio measuring apparatus (110) is integrated in the first camera (102).

10. Method and/or use according to any one of claims 4 to 9, **characterised in that** the mobile monitoring device (100) comprises an upper part (103) in which at least the first camera (102) is integrated, preferably **in that** the upper part (103) of the mobile monitoring device (100) is arranged to be rotatable relative to a lower part thereof through 360°.

11. Method and/or use according to claim 10, **characterised in that** provided in or at the upper part (103) of the mobile monitoring device (100) is at least one further measuring unit (112) which is connected, in particular in wire-free manner, with the control station (14) of the metallurgical plant (10) and can be oriented towards a region of the metallurgical plant (10) so as to monitor an operating state of the metallurgical plant (10) by this further measuring unit (112).

12. Method and/or use according to claim 11, **characterised in that** the further measuring unit (112) is constructed in the form of a thermal imaging camera by which thermal observation of containers, which are filled with hot liquid material, of the metallurgical plant (10) is carried out.

13. Method and/or use according to claim 11 or 12, **characterised in that** the further measuring unit (112) is constructed in the form of an infrared pyrometer by which surface temperature measurement values of components of the metallurgical plant (10), of products produced by the metallurgical plant (10) and/or of liquid melts or slags are determined.

14. Method and/or use according to any one of claims 11 to 13, **characterised in that** a protective hood (114) by which the further measuring unit (112) is screened relative to the environment is provided, preferably **in that** the protective hood (114) is permeable with respect to thermal radiation and/or infrared radiation, preferably in addition that the protective hood (114) is constructed from safety glass.

15. Method and/or use according to any one of claims 11 to 14, **characterised in that** the further measuring unit (112) is constructed in the form of a gas measuring apparatus by which the concentration of a specific gas in the environment of the metallurgical plant (10) and preferably in the immediate vicinity of the mobile monitoring device (100) is determined, preferably **in that** the specific gas is argon (Ar), ammonium (NH3), carbon dioxide (CO2), carbon monoxide (CO), chlorine (CI2), chlorine dioxide (ClO2), hydrogen (H2), hydrogen chloride (HCI), hydrogen cyanide (HCN), hydrogen sulphide (H2S), methane (CH4), nitrogen oxide (NO), nitrogen dioxide (NO2), oxygen (O2), hydrogen phosphide (PH3) and/or sulphur dioxide (SO2).

16. Method and/or use according to any one of claims 4 to 15, **characterised in that** the mobile monitoring device (100) and preferably all cameras (102, 108) and measuring apparatus (110, 112) mounted thereon are of temperature-resistant construction, preferably in that this temperature-resistant construction of the mobile monitoring device (100) and preferably the cameras (102, 108) and measuring apparatus (110, 112) mounted thereon are designed for a constant temperature of 40° C or more.

17. Method and/or use according to claim 16, **characterised in that** the surfaces of the mobile monitoring device (100) and preferably the cameras (102, 108) and measuring apparatus or units (110, 112) mounted thereon are each of heat-resistant aluminised para-aramide.

18. Method and/or use according to claim 16 or 17, **characterised in that** the wheels (106) or tracks of the stand (104) of the mobile monitoring device (100) are coated with heat-resistant polyester resin and/or at least partly consist of heat-resistant polyester resin.

19. Method and/or use according to any one of claims 4 to 18, **characterised in that** the planar surface (12) on which the mobile monitoring device (100) is moved is disposed in a risk region (13.1, 13.2), which can be moved over, of the metallurgical plant (10), particularly in the form of a casting platform (25), a furnace platform and/or a metallurgical plant floor.

20. Method and/or use according to any one of claims 4 to 19, **characterised in that** the mobile monitoring device (100) comprises a pressure container (116), which contains a fluid disposed under pressure and is received, in particular, within the stand (104), wherein the pressure container (106) is equipped with means in order to remove the fluid permanently from the pressure container (106) and direct it towards an outer lens of the objective of the first camera (102) and/or the second camera (108) so that particles adhering to the lens are blown away.

21. Method and/or use according to any one of claims 5 to 20, **characterised in that** the mobile monitoring device (100) comprises a pressure container (116), which contains a fluid disposed under pressure and is received, in particular, within the stand (104), wherein the motor (M) is operable by compressed air and coupled with the pressure container (116) so that a drive force is exerted on the wheels (106) or the chains.

22. Method and/or use according to any one of claims 4 to 21, **characterised in that** an interior space (118) of the monitoring device (100) in which the at least first camera (102) and optionally further cameras (108) and/or measuring units (110, 112) is or are received, is acted on permanently with fluid from the pressure container (116) so that particles from the environment of the monitoring device (100) are kept away from the interior space (118) thereof.

23. Mobile monitoring device (100), particularly for use in a metallurgical plane (10), comprising
a stand (104) with wheels (106) or tracks,
a motor (M) for driving the wheels (106) or tracks and
at least a first camera (102),
**characterised in that**
a pressure container (116) is provided, which contains a fluid disposed under pressure (P) and is received, in particular, within the stand (104), wherein the motor (M) is operable by compressed air and can be coupled with the pressure container (106) so that a drive force is exerted on the wheels (106) or the tracks.

24. Mobile monitoring device (100) according to claim 23, **characterised in that** the pressure container (116) is equipped with means in order to remove the fluid permanently from the pressure container (106) and to be directed onto an outer lens of the objective of the first camera (102) so that particles adhering to the lens are blown away.

25. Mobile monitoring device (100) according to claim 23 or 24, **characterised in that** an interior space (118) of the monitoring device (100) in which the at least first camera (102) and optionally further cameras and/or measuring units (110, 112) is or are received is permanently acted on by fluid from the pressure container (116) so that particles from the environment of the monitoring device (100) are kept away from the interior space (118) thereof.

## Revendications

1. Procédé destiné à l'exploitation d'un site sidérurgique (10), dans lequel on met en oeuvre un mécanisme de surveillance (100) comprenant au moins une première caméra (102), **caractérisé**
**en ce que** le mécanisme de surveillance (100) est mobile, est entraîné avec un moteur pneumatique et peut être déplacé librement dans la zone du site sidérurgique (10) sur une surface (12) essentiellement plane ; et
**en ce qu'**au moins un processus d'exploitation indispensable du site sidérurgique (10) est commandé à distance sur base de la zone de visualisation réglée (B) de la première caméra, avec laquelle une zone du site sidérurgique (10) est observée.

2. Utilisation d'un mécanisme de surveillance mobile (100) destiné à l'exploitation d'un site sidérurgique (10) ; dans laquelle le mécanisme de surveillance (100) présente au moins une première caméra (102) et au moins un processus d'exploitation indispensable du site sidérurgique (10) est commandé à distance sur base d'une zone de visualisation réglée (B) de la première caméra (102), avec laquelle une zone du site sidérurgique (10) est observée.

3. Utilisation d'un mécanisme de surveillance mobile (100) destiné à l'exploitation d'un site sidérurgique (10) selon la revendication 2, **caractérisée en ce que** le mécanisme de surveillance mobile (100) peut être déplacé librement dans la zone du site sidérurgique (10) sur une surface (12) essentiellement plane.

4. Procédé selon la revendication 1 et/ou utilisation selon la revendication 3, **caractérisés en ce que** le mécanisme de surveillance mobile (100) est commandé à distance en particulier sans fil à partir d'un poste de commande (14) du site sidérurgique (10) ; dans lesquels les données d'images de la première caméra (102) sont transmises au poste de commande (14).

5. Procédé et/ou utilisation selon la revendication 4, **caractérisés en ce que** le mécanisme de surveillance mobile (100) présente un moteur (M) ainsi qu'un socle (104) comprenant des roues (106) ou des chenilles, qui roulent sur la surface plane (12) ; dans lesquels au moins une roue (106) ou au moins une chenille est accouplée au moteur (M) et est par conséquent entraînée avec ce dernier.

6. Procédé et/ou utilisation selon la revendication 4 ou 5, **caractérisés en ce que**, au moyen de la première caméra (102), aussi bien une zone du site sidérurgique (10) qu'une zone environnante du mécanisme de surveillance mobile (100) sont observées dans la direction du parcours de ce dernier sur la surface plane (12).

7. Procédé et/ou utilisation selon la revendication 4 ou 5, **caractérisés en ce que** le mécanisme de surveillance mobile (100) présente une deuxième caméra (108) avec laquelle une zone environnante du mécanisme de surveillance mobile (100) est observée dans la direction du parcours de ce dernier sur la surface plane (12) ; dans lesquels une zone du site sidérurgique (10) est observée à titre exclusif au moyen de la première caméra (102).

8. Procédé et/ou utilisation selon la revendication 6 ou 7, **caractérisés en ce que** la première caméra (102) est commandée à distance à partir du poste de commande (14) ; de préférence, **en ce que** le réglage de la zone de visualisation de la première caméra (102) peut être modifié en fonction d'une direction prédéfinie et/ou en fonction d'une focalisation par l'intermédiaire de la commande à distance au moyen du poste de commande (14).

9. Procédé et/ou utilisation selon l'une quelconque des revendications 4 à 8, **caractérisés en ce que** le mécanisme de surveillance mobile (100) présente au moins un indicateur de volume (110) dont les signaux sont transmis au poste de commande (14) du site sidérurgique (10) ; de préférence, **en ce que** les signaux de l'indicateur de volume (110) sont mis à disposition dans le poste de commande (14) du site sidérurgique (10) sous la forme de signaux acoustiques ; et/ou de manière davantage préférée, **en ce que** l'indicateur de volume (110) est intégré dans la première caméra (102).

10. Procédé et/ou utilisation selon l'une quelconque des revendications 4 à 9, **caractérisés en ce que** le mécanisme de surveillance mobile (100) présente une partie supérieure (103) dans laquelle est intégrée au moins la première caméra (102) ; de préférence, **en ce que** la partie supérieure (103) du mécanisme de surveillance mobile (100) est disposée de manière à pouvoir effectuer des rotations de 360° par rapport à une partie inférieure du mécanisme en question.

11. Procédé et/ou utilisation selon la revendication 10, **caractérisés en ce que**, dans ou contre la partie supérieure (103) du mécanisme de surveillance mobile (100), est prévue au moins une unité de mesure supplémentaire (112) qui est reliée, en particulier sans fil, au poste de commande (14) du site sidérurgique (10) et qui peut être orientée sur une zone du site sidérurgique (10) à des fins de surveillance, avec cette unité de mesure supplémentaire (112), d'un état d'exploitation du site sidérurgique (10).

12. Procédé et/ou utilisation selon la revendication 11, **caractérisés en ce que** l'unité de mesure supplémentaire (112) est réalisée sous la forme d'une caméra thermique, avec laquelle une observation de type thermique de cuves du site sidérurgique (10), qui sont remplies avec une matière liquide chaude, est mis en oeuvre.

13. Procédé et/ou utilisation selon la revendication 11 ou 12, **caractérisés en ce que** l'unité de mesure supplémentaire (112) est réalisée sous la forme d'un pyromètre à infrarouge avec lequel des valeurs de températures superficielles de composants du site sidérurgique (10), de produits fabriqués avec le site sidérurgique (10) et/ou de laitiers, respectivement de masses fondues liquides sont déterminées.

14. Procédé et/ou utilisation selon l'une quelconque des revendications 11 à 13, **caractérisés en ce que** l'on prévoit un capot de protection (14) qui joue le rôle d'écran entre l'unité de mesure supplémentaire (112) et l'environnement ; de préférence, **en ce que** le capot de protection (114) est perméable en ce qui concerne le rayonnement thermique et/ou le rayonnement infrarouge ; de manière davantage préférée **en ce que** le capot de protection (114) est réalisé à partir de verre de sécurité.

15. Procédé et/ou utilisation selon l'une quelconque des revendications 11 à 14, **caractérisés en ce que** l'unité de mesure supplémentaire (112) est réalisée sous la forme d'un appareil de mesure du gaz, avec lequel la concentration d'un gaz déterminé dans l'environnement du site sidérurgique (10) et de préférence à proximité immédiate du mécanisme de surveillance mobile (100) est déterminée ; de préférence, **en ce que** le gaz déterminé représente de l'argon (Ar), de l'ammoniac (NH₃), du dioxyde de carbone (CO₂), du monoxyde de carbone (CO), du chlore (Cl₂), du dioxyde de chlore (ClO₂), de l'hydrogène (H₂), du gaz chlorhydrique (HCl), du cyanure d'hydrogène (HCN), du sulfure d'hydrogène (H₂S), du méthane (CH₄), du monoxyde d'azote (NO), du dioxyde d'azote (NO₂), de l'oxygène (O₂), de l'hydrure de phosphore (PH₃) et/ou du dioxyde de soufre (SO₂).

16. Procédé et/ou utilisation selon l'une quelconque des revendications 4 à 15, **caractérisés en ce que** le mécanisme de surveillance mobile (100) et de préférence toutes les caméras (102, 108) et tous les appareils de mesure (110, 112) qui y sont appliqués sont réalisés de manière à pouvoir résister à la température ; de préférence en ce que cette réalisation du mécanisme de surveillance mobile (100) et de préférence de toutes les caméras (102, 108) et de tous les appareils de mesure (110, 112) qui y sont appliqués, permettant de résister à la température, est conçue pour durée température durable de 40 °C ou plus.

17. Procédé et/ou utilisation selon la revendication 16, **caractérisés en ce que** les surfaces du mécanisme de surveillance mobile (100) et de préférence des caméras (102, 108) et des appareils, respectivement des unités de mesure (110, 112) qui y sont appliqués sont réalisées, respectivement à partir de para-amide aluminisé qui résiste à la chaleur.

18. Procédé et/ou utilisation selon la revendication 16 ou 17, **caractérisés en ce que** les roues (106) ou les chenilles du socle (104) du mécanisme de surveillance mobile (100) sont enduites d'une résine de polyester qui résiste à la chaleur et/ou sont constituées au moins en partie d'une résine de polyester qui résiste à la chaleur.

19. Procédé et/ou utilisation selon l'une quelconque des revendications 4 à 18, **caractérisés en ce que** la surface plane (12), sur laquelle se déplace le mécanisme de surveillance mobile (100), se trouve dans une zone d'exposition carrossable (13.1, 13.2) du site sidérurgique (10), en particulier sous la forme d'une plate-forme de coulée (25), d'une plate-forme de four et/ou d'un sol d'usine sidérurgique.

20. Procédé et/ou utilisation selon l'une quelconque des revendications 4 à 19, **caractérisés en ce que** le mécanisme de surveillance mobile (100) présente une cuve sous pression (116) qui contient un fluide mis sous pression et qui est logée en particulier au sein du socle (104) ; dans lesquels la cuve sous pression (106) est équipée de moyens qui sont destinés à prélever le fluide en permanence à partir de la cuve sous pression (106) et à l'orienter sur une lentille externe de l'objectif de la première caméra (102) et/ou de la deuxième caméra (108), d'une manière telle que des particules qui adhèrent à la lentille peuvent être éliminées par soufflage.

21. Procédé et/ou utilisation selon l'une quelconque des revendications 5 à 20, **caractérisés en ce que** le mécanisme de surveillance mobile (100) présente une cuve sous pression (116) qui contient un fluide mis sous pression et qui est logée en particulier au sein du socle (104) ; dans lesquels le moteur (M) peut être entraîné avec de l'air comprimé et peut être accouplé à la cuve sous pression (16), d'une manière telle qu'une force d'entraînement s'exerce sur les roues (106) ou sur les chenilles.

22. Procédé et/ou utilisation selon l'une quelconque des revendications 4 à 21, **caractérisés en ce qu'**un espace interne (118) du mécanisme de surveillance (100), dans lequel est/sont logée(s) ladite au moins une première caméra (102) et le cas échéant d'autres caméras (108) et/ou d'autres unité de mesure (110, 112), est sollicité en permanence avec du fluide à partir de la cuve sous pression (116) d'une manière telle que des particules émanant de l'espace qui entoure le mécanisme de surveillance (100) sont maintenues à distance à l'extérieur de l'espace interne (118) du mécanisme en question.

23. Mécanisme de surveillance mobile (100), en particulier pour son utilisation dans un site sidérurgique (10), comprenant :
un socle (104) muni de roues (106) ou de chenilles ;
un moteur (M) destiné à entraîner les roues (106) ou les chenilles ;
au moins une première caméra (102) ;
**caractérisé**
**en ce qu'**on prévoit une cuve sous pression (116) qui contient un fluide mis sous pression et qui est logée en particulier au sein du socle (104) ; dans lequel le moteur (M) peut être entraîné avec de l'air comprimé et peut être accouplé à la cuve sous pression (16), d'une manière telle qu'une force d'entraînement s'exerce sur les roues (106) ou sur les chenilles.

24. Mécanisme de surveillance mobile (100) selon la revendication 23, **caractérisé en ce que** la cuve sous pression (106) est équipée de moyens qui sont destinés à prélever le fluide en permanence à partir de la cuve sous pression (106) et à l'orienter sur une lentille externe de l'objectif de la première caméra (102), d'une manière telle que des particules qui adhèrent à la lentille peuvent être éliminées par soufflage.

25. Mécanisme de surveillance mobile (100) selon la revendication 23 ou 24, **caractérisé en ce qu'**un espace interne (118) du mécanisme de surveillance (100), dans lequel est/sont logée(s) ladite au moins une première caméra (102) et le cas échéant d'autres caméras et/ou d'autres unité de mesure (110, 112), est sollicité en permanence avec du fluide à partir de la cuve sous pression (116) d'une manière telle que des particules émanant de l'espace qui entoure le mécanisme de surveillance (100) sont maintenues à distance à l'extérieur de l'espace interne (118) du mécanisme en question.
